# Europäisches Patentamt
# European Patent Office
# Office européen des brevets

(19)

(11) Publication number: **0 244 154 B1**

(12) # EUROPEAN PATENT SPECIFICATION

(45) Date of publication of the patent specification:
27.12.90

(21) Application number: 87303559.6

(22) Date of filing: 23.04.87

(51) Int. Cl.⁵: **F16L 9/12**, F16L 9/19, F16L 11/12, B29C 47/20, B29D 23/22

(54) Device for making pipings of thermoplastic materials.

(30) Priority: 29.04.86 CS 3112/86
15.10.86 CS 7464/86
13.03.87 CS 1720/87

(43) Date of publication of application:
04.11.87 Bulletin 87/45

(45) Publication of the grant of the patent:
27.12.90 Bulletin 90/52

(84) Designated Contracting States:
DE FR GB IT SE

(56) References cited:
DE-B- 1 256 002
DE-B- 1 296 899
FR-A- 773 584
FR-A- 2 344 397
FR-A- 2 466 333
US-A- 3 357 051

(73) Proprietor: Ceskoslovenska akademie ved, Narodni trida 3, Praha 1(CS)

(72) Inventor: Masak, Vladimir, 8 puskinovo Manesti, Praha 6(CS)
Inventor: Novotny, Josef, No. 419 Jablonecka, Praha 9(CS)
Inventor: Cervenka, Jan, No. 204 Stredoskluky, Praha(CS)
Inventor: Rulcka, Frantisek, No. 467 Homolova, Praha 9(CS)

(74) Representative: Matthews, Graham Farrah et al, BROOKES & MARTIN Incorporating MATTHEWS, HADDAN & CO. High Holborn House 52/54, High Holborn, London, WC1V 6SE(GB)

## Description

The invention concerns the die for extruding the thermoplastic pipings of complex profile, said pipings being used in mechanical construction and chemical industries.

There are known several equipments and methods for production of thermoplastic pipings with various profiles.

There are known thermoplastic profiles divided by partition walls to several separated ducts, while neither of them is surrounded by other spaces on its whole circumference. This arrangement is used for windows, furniture or facing profiles, but is not suitable in heat exchangers or for transport of one or several gases or liquids at defined thermal and pressure conditions. Other thermoplastic profiles are formed by the external (outer) and internal (inner) pipes which are along the whole pipe lengths connected at least by one longitudinal partition wall. These pipings can be produced in two ways. According to the first procedure the external and internal pipes are formed separately and then, in another operation, the piping is completed by fixing the internal pipe into the external one. The partitions are shaped simultaneously with the external or internal pipe. The length of pipes fixed one into the other is limited and is limiting the length of piping up to several tens of meters. For application where longer pipings are needed it is necessary to connect several pipes. According to the second method both the external and internal pipes are shaped successively, in two extrusion heads situated one behind the other, while their mutual positioning is free. The length of so produced pipings is not limited. The disadvantage of this arrangement is small strength of these pipings which is limiting their use. There is a certain risc of deformation or undesired shift of the pipes. To reach the required strength it would be necessary to make the wall thicker which is considerably reducing the thermal conductivity. Mutual disadvantage of both these methods is the high product cost and only straight pipes can be produced in this way.

Other equipment for extruding thermoplastic pipings includes a mandrel encircled by a bushing supported by a structure such that two concentric annular spaces are formed, the bushing having a discharge end with axial slots communicating the annular spaces in a limited zone. The mandrel and bushing have a reduced taper and are inclined relatively to each other.

But this construction has brought next difficulties, especially in the sphere of quality, of pipings. The extrusion head is based on a «cross head», i.e. the molten plastic material is led into the head from the head side so that it must change the direction. This fact is inconvenient with respect to rheologic properties of the melt, especially with respect to the relatively uneven heating of the head. Further the cooling of the internal tube is possible from inside only. The space between the tubes is not cooled at all. So bridges connecting the internal and external tube are not cooled as well, which causes their tearing during the manufacture.

The above mentioned disadvantages are avoided by using the extrusion head, formed by a heated body in whose radial direction there are first distance spacers carrying a fixed extruder core. In the longitudinal direction and in the outlet part thereof, there are longitudinal slots longer than 1/10 of the length of the extruder core and an inner core is fixed within the extruder core by second distance spacers. The inner core has its outlet side equipped with a projecting member and tooling channels for the liquid and in the extruder core and in the inner core there are formed cooling channels for the gas.

The advantage of the invention is first of all the simultaneous production of the whole piping profile, which means multifold reduction of the production cost. The method of production and design of the extrusion head enables shaping of pipings made of thermoplastics, e.g. by winding on a cylindrical support immediately, behind the exit from the production line. These properties of pipings made of thermoplastics can be advantageously used as substitutes of metal pipings e.g. in heat exchangers. Lower thermal conductivity of thermoplastic materials is in this case well balanced by the possibility of use of real countercurrent flow which is not possible with metal pipes, or is costly and complex. Moreover there is a lower tendency to formation of scale. The result are better properties of these pipings. Cylindrical arrangement of heat exchangers is compact and reduces the occupied space and base area, moreover due to its lower weight it is easier for transport.

Pipings made of thermoplastics according to this invention can be also used for transport of gases and liquids, while the given profile enables simultaneous transport of several fluids or transport of only one fluid which is insulated or cooled or heated.

The evident advantages of the invention is also the cooling of the internal tube and bridges connecting the internal and external ones.

The invention will now be described by way of example with reference to the accompanying drawings in which:

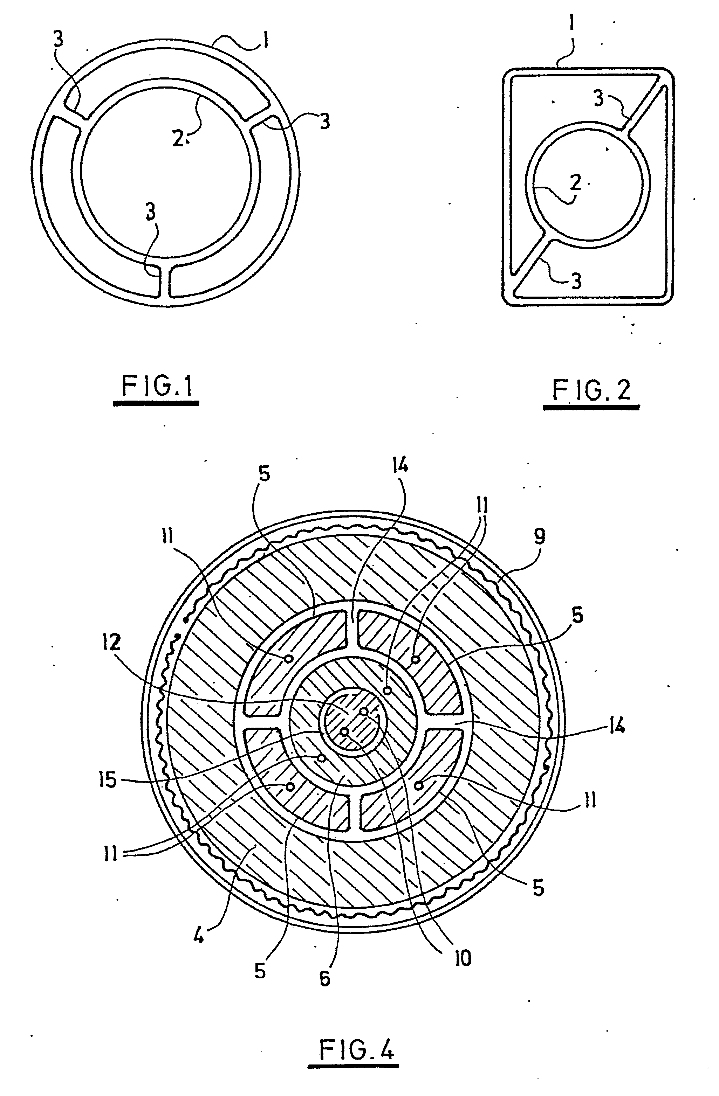

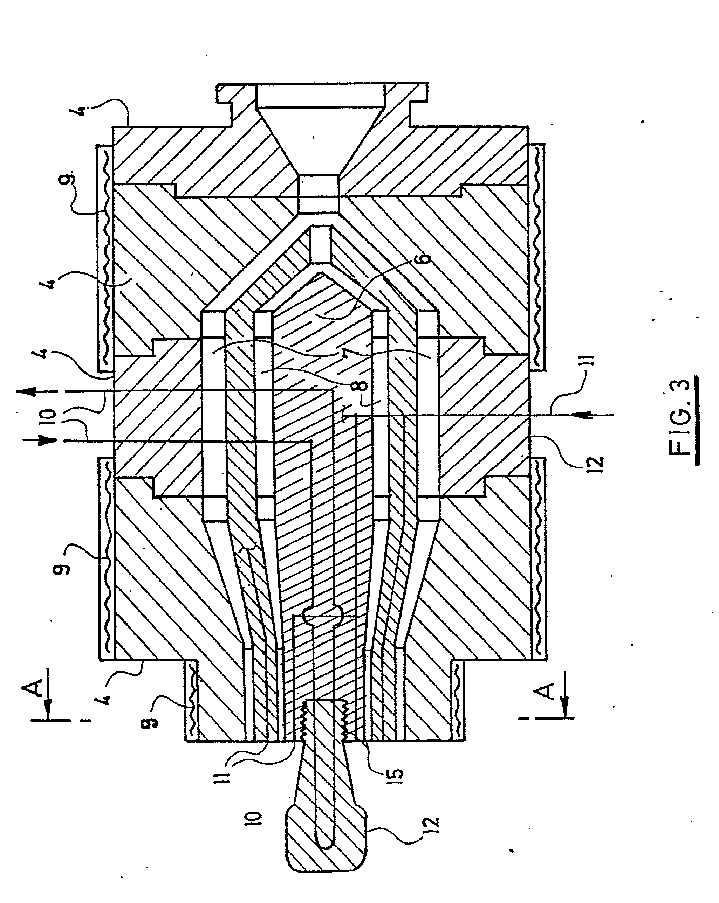

FIGURES 1 and 2 are examples of two profiles of pipings made of thermoplastic resin according to this invention,

FIGURE 3 is an axial section of the extrusion head, and

FIGURE 4 is a cross section through the extrusion head in its outlet part taken along the line A–A in Figure 3.

The profile of piping made of thermoplasts is formed by the external pipe 1, internal pipe 2 and longitudinal partition wall 3. Shape and complexity of the profile is fixed by the extrusion head which forms the shaping part of the extrusion production line. The extrusion head consists of the body 4, equipped at its circumference by heating elements 9, while in the axis of the extrusion head is by the first distance spacers 7 fixed the extruder core 5. At the exit from the extruder core 5 is by second distance spacers 8 fixed the core 6. To the core 6 is at the exit part of the extrusion head, e.g. by use of a thread 21 fixed the projection member 12 with cooling channels 10 of the liquid. These channels 10 are by the core 6 interconnected with the outside part of the body 4. Similarly from the extrusion head are led the cooling channels 1, of the gas which are terminated in the body of the extruder core 5 and core 6.

The external pipe 1 and internal pipe 2 of the piping made of thermoplastic resin are mutually interconnected at least by one longitudinal partition wall 3. These partition walls 3 are usually three or four so that the piping is sufficiently strong. Usually the circular shape of the scross section of both pipes 1, 2 can in generally have the shape of a polygon.

At production of pipings of thermoplastic resins are into the storage tank of the extrusion line fed granular thermoplasts which are heated to the requested temperature. Molten thermoplast is by use of the screw conveyer pressed into the extrusion head in which it is flowing around the core 6 and extruder core 5. Behind the spacers 7, 8 which are situated at the inlet or not farther than middle part of the extrusion head the stream of the molten thermoplast is re-united and is forming a monolithic surface of the external and internal pipes 1 and 2. Longitudinal partition walls 3 form in the outlet part of the extrusion head where the molten material is filling the longitudinal slots 14 formed in the extruder core 5. The length of these slots must be equal at least to one tenth of the length of the extrusion head. The needed temperature of the melt in the extrusion head is reached by use of heating strips 9. Internal cooling takes place simultaneously both in the extruder core 5, core 6 and the projection member 12 as well, which serves also for callibration of the internal pipe 2. Behind the extrusion head is the thermoplastic piping cooled usually in a liquid bath.

Cooling channels 10 of the liquid formed in the projection 12 serve for cooling of the internal pipe 2. By the gas leaving the core 6 a narrow layer is formed between the surface of the projection member 12 and the internal pipe 2 which is reducing their friction. The gas phase leaving the extruder core 5 is pressing the external pipe 1 to the callibration cylinder and is simultaneously cooling the internal and external pipes 2 and 1, inclusive the longitudinal partition walls 3. Moreover the gas due to its motion keeps the thermoplastic piping soft which is enabling its winding on the cylinder of the winding unit or other shaping.

The cheap production of a monolithic profile of thermoplastic piping together with its technical parameters enables its use in heat exchangers and in units for transport of one or several fluids. The heat exchangers can be formed of a thermoplastic pipe wound on a cylindrical support in one or several layers or by winding several parallel pipes so as to achieve the most advantageous heat transfer conditions. The transport equipment can be used for transport of warm or cold liquids through the internal pipe with thermal insulation e.g. by a gas which flows in the space in between both pipes, for transport of several fluids by one profile of the piping simultaneously or for keeping a constant temperature of the fluid flowing in the internal pipe and its heating or cooling by use of a fluid flowing through other parts of the piping.

The given properties of the piping enable its use as thermally insulating cover of metal or other cylindrical objects such as cables in construction as solid construction element of various shapes etc.

## Claim

Extrusion head for production of pipes of thermoplastic resin, comprising a heated body (4) in whose radial direction there are first distance spacers (7) carrying a fixed extruder core (5), said core being so constructed that in the longitudinal direction and in the outlet part thereof there are longitudinal slots (14) longer than 1/10 of the length of the extruder core (5) and an inner core (6) is fixed within the extruder core (5) by second distance spacers (8), said inner core (6) having its outlet side equipped with a projecting member (12) and cooling channels (10) for the liquid, and in the extruder core (5) and in the inner core (6) there are formed cooling channels (11) for the gas.

## Patentanspruch

Extruderkopf für die Herstellung von Rohren aus thermoplastischem Kunststoff, mit einem beheizbaren Gehäuse (4), in dessen radialer Erstreckung erste Abstandshalter (7) angeordnet sind, die einen festen Extruderkern (5) tragen, der derart gestaltet ist, daß in seiner Längserstreckung in seinem Auslaßbereich Längsschlitze (14) vorhanden sind, die länger als ein Zehntel der Länge des Extruderkernes (5) sind, daß ein innerer Kern (6) innerhalb des Extruderkernes (5) durch zweite Abstandshalter (8) befestigt ist, daß die Auslaßseite des inneren Kernes (6) mit einem Vorsprung (12) sowie mit Kühlkanälen (10) für die Flüssigkeit ausgeführt ist, und daß im inneren Kern (6) Kühlkanäle (11) für das Gas eingeformt sind.

## Revendications

Tête d'extrusion pour la production de tuyaux en résine thermoplastique, comprenant un corps chauffé (4) dans le sens radial duquel est disposée une première série d'entretoises (7) portant un mandrin fixe d'extrusion (5), ce mandrin étant construit de telle manière que dans le sens longitudinal et dans la partie de sortie il y a des fentes longitudinales (14) dont la longueur est supérieure à un dixième de la longueur du mandrin d'extrusion (5), un noyau intérieur (6) étant fixé à l'intérieur du mandrin d'extrusion (5) par une deuxième série d'entretoises (8), ledit noyau intérieur (6) ayant son extrémité de sortie munie d'un élément saillant (12) avec des canaux de refroidissement (10) pour un liquide de refroidissement, des canaux de refroidissement (11) pour un gaz de refroidissement étant ménagés dans le mandrin d'extrusion (5) et dans le noyau intérieur (6).

FIG.1

FIG.2

FIG.4

FIG. 3